# EUROPÄISCHE PATENTSCHRIFT

(11) **EP 2 259 083 B1**
(45) Veröffentlichungstag und Bekanntmachung des Hinweises auf die Patenterteilung: **26.08.2015**
(21) Anmeldenummer: 09161975.9
(22) Anmeldetag: 04.06.2009
(51) Int. Cl.: G01S 3/74, G01S 3/46

(54) **Dekorreliertes System**
Decorrelated system
Système décorrélé

(43) Veröffentlichungstag der Anmeldung: 08.12.2010
(73) Patentinhaber: Lambda: 4 Entwicklungen GmbH, 22767 Hamburg (DE)
(72) Erfinder: Reimann, Rönne, 22769, Hamburg (DE)
(74) Vertreter: Raffay & Fleck

(56) Entgegenhaltungen:
- WO-A1-03/048800
- WO-A1-2007/038969
- WO-A1-2007/049208
- WO-A1-2007/085517
- US-A1- 2006 044 147

## Beschreibung

Die vorliegende Erfindung betrifft ein Verfahren zur Analyse von Einfallsrichtungen von Wellenanteilen, insbesondere elektromagnetischer, beinhaltend das Abstrahlen einer Welle von einer Abstrahlvorrichtung an einem ersten Ort und das Empfangen der an einem zweiten Ort eingestrahlten Wellenanteile der Welle mit mindestens zwei Empfangsvorrichtungen und Auswerten der eingestrahlten Wellenanteile bezüglich der Einfallsrichtung.

Ein solches Verfahren ist beispielsweise bekannt aus der WO 2007/085517 A1. Dabei ist es insbesondere bekannt, als Empfangsvorrichtung ein Array von Antennen zu verwenden. Beispielsweise ist hier die Verwendung eines linearen Antennenarrays bekannt. Auf Basis der Phasenverschiebung der von den einzelnen Antennen des Arrays aufgenommenen Signale kann dann bei idealen Bedingungen die Einfallsrichtung der Welle errechnet oder durch spezielles Überlagern der Signale der einzelnen Antennen bestimmt werden. Zur Verbesserung der Auswertungen können hier des weiteren Verfahren wie MUSIC und/oder Capon angewandt werden.

Tritt aufgrund der Umgebung sogenanntes Multipathing auf, so ist es ohne weitere Vorkehrungen in der Regel nicht mehr möglich, die Einfallsrichtung beziehungsweise die Einfallsrichtungen zu bestimmen. Zur Lösung dieses Problems ist es bekannt, die Abstrahlung auf verschiedenen Frequenzen durchzuführen und durch die Auswertung der frequenzabhängigen Phasenverschiebung eine Richtungsanalyse zu erreichen. Dies setzt jedoch, je nach Komplexität der Umgebung, die Verwendung einer Vielzahl von Frequenzen voraus. Des Weiteren muss der Frequenzhub relativ groß gewählt werden oder muss die Genauigkeit der verwendeten Bauteile vergleichsweise hoch sein. Somit erfordert die Anwendung dieses Verfahrens vergleichsweise hohen Aufwand. Des Weiteren ist es auf Frequenzbereiche beschränkt, in denen ein ausreichend breites Frequenzspektrum verfügbar ist.

Darüber hinaus ist es aus der WO 03/048800 A1 bekannt, empfängerseitig eine Datenmatrix durch eine gemeinsame Hauptkomponententransformation zu erstellen und über eine Verschiebungsgleichung eine Schätzung der der Ausbreitungsparameter zu erreichen.

Aus der WO 2007/038969 ist darüber hinaus zwei Signale vor der Abstrahlung durch zwei Antennen zu vertauschen und zeitlich zu verzögern Beide Verfahren erfordern für eine entsprechende Genauigkeit jedoch einen erheblichen Aufwand.

Aufgabe der vorliegenden Erfindung ist es somit, die geschilderten Nachteile zu vermeiden und insbesondere ein Verfahren, ein System und eine Verwendung anzugeben, die es ermöglichen, die Einfallsrichtung von Wellen auch dann mit vergleichsweise geringem Aufwand zu bestimmen, wenn ein breites Frequenzspektrum nicht zur Verfügung steht. Aufgabe der vorliegenden Erfindung ist es somit auch, die bei gegebener Genauigkeit der verwendeten Bauteile zu erzielende Winkelauflösung zu verbessern.

Das den unterschiedlichen erfinderischen Ausprägungen der vorliegenden Erfindung zugrunde liegende Prinzip ist es, zwei Abstrahlvorrichtungen zur Dekorrelation zu verwenden, die bei der Abstrahlung relativ zu einem Ort ortsfest angeordnet sind. Der erfinderische Gedanke, der diesem Verfahren zugrunde liegt, manifestiert sich bei entsprechender Anordnung, beziehungsweise Wahl von Abstrahlvorrichtungen dann darin, dass die am Empfangsort eintreffenden Wellenanteile durch die spezielle Abstrahlung dekorreliert sind und somit unterschieden werden können und dadurch auch bei Multipathing eine Analyse der Einfallsrichtungen auf Basis der Phasendifferenzen und/oder Amplitudenunterschiede der empfangenen Signale der mindestens zwei Empfangsvorrichtungen möglich ist. Dabei kann die Dekorrelation zum Einen durch die Wahl eines Mindestabstandes zwischen der ersten Abstrahlvorrichtung und der zweiten Abstrahlvorrichtung oder durch die Verwendung von Abstrahlvorrichtungen, die bezüglich der Polarisation unterschiedliche Abstrahlcharakteristiken aufweisen, erfolgen.

Die vorliegende Aufgabe wird gelöst durch ein Verfahren gemäß Anspruch 1, durch ein System gemäß Anspruch 14, sowie durch eine Verwendung gemäß Anspruch 15. Die Unteransprüche zwei bis dreizehn geben vorteilhafte und Weiterbildungen an, die teilweise eigenständigen Erfindungswert aufweisen.

Erfindungsgemäß weist das Verfahren zur Analyse von Einfallsrichtungen von Wellenanteilen, insbesondere elektromagnetischer, gemäß Anspruch 1 folgende Schritte auf:
- A: Abstrahlen einer ersten Welle von einer ersten Abstrahlvorrichtung an einem ersten Ort
- B: Empfangen der an einem zweiten Ort eingestrahlten Wellen anteile der ersten Welle mit mindestens zwei Empfangsvorrichtungen
- C: Abstrahlen einer zweiten Welle von einer zweiten Abstrahlvorrichtung an dem ersten Ort
- D: Empfangen der am zweiten Ort eingestrahlten Wellenanteile der zweiten Welle
- F: Auswertung der empfangenen Signale, wobei die empfangenen Wellenanteile nach unterschiedlichen Einfallsrichtungen der Wellenanteile aufgetrennt werden und/oder Ermitteln einer Anzahl von unterschiedlichen Einfallsrichtungen aus denen die empfangenen Wellenanteile übertragen wurden,
wobei dies unter Analyse der Phasendifferenzen und/oder Amplituden der Signale der mindestens zwei Empfangsvorrichtungen geschieht,
wobei der Abstand zwischen erster und zweiter Abstrahlvorrichtung kleiner ist als der Abstand zwischen den Abstrahlvorrichtungen und den Empfangsvorrichtungen und
dadurch gekenzeichnet, die Abstrahlvorrichtungen einen Abstand voneinander aufweisen, der größer ist als der Fehler bezüglich der Wellenlänge bei der Analyse der Phasendifferenzen, der kleinsten der zur Analyse verwendeten Wellenlänge der ersten und zweiten Welle und/oder die Abstrahlvorrichtungen eine bezüglich der Polarisation unterschiedliche Abstrahlcharakteristik aufweisen.

Dabei können die Schritte A bis D auch in anderer Reihenfolge durchgeführt werden, beispielsweise kann auch das Abstrahlen der zweiten Welle erfolgen, bevor Wellenanteile der ersten Welle gemäß Schritt B am zweiten Ort empfangen wurden.

Der Abstand zwischen erster und zweiter Abstrahlvorrichtung ist klein im Verhältnis zum Abstand zwischen den Abstrahlvorrichtungen und den Empfangsvorrichtungen zu wählen. Die Wahl der entsprechenden

Abstandsverhältnisse ist notwendig, um eine ausreichend kleine Winkeldivergenz am Empfangsort zu gewährleisten, um eine Zuordnung der einzelnen Wellenanteile zu einzelnen Ausbreitungswegen zu ermöglichen. Klein kann dabei, je nach Einsatzumfeld, ein Verhältnis von unter eins bedeuten. In komplexeren Umgebungen wird das Verhältnis jedoch deutlich kleiner, insbesondere in Größenordnungen von 10⁻² oder kleiner zu wählen sein. Dabei ist jedoch zu beachten, dass der Abstand der Abstrahlvorrichtungen einen Mindestabstand gemessen an der Auflösungsfähigkeit der Analyse nicht unterschreitet, um überhaupt eine (messbare) Dekorrelation zu erreichen. Der Abstand darf also den (absoluten) Messfehler bezüglich der Wellenlänge bei der Analyse der Phasendifferenz nicht unterschreiten. In der Praxis hat sich ein Mindestabstand von mindestens 3%, insbesondere mindestens 5%, der kleinsten Wellenlänge, die zur Analyse verwendet wird, als besonders vorteilhaft erwiesen. Dieser Mindestabstand ist abhängig von der Auflösung der gewählten Bauteile.

Dabei wird unter (absolutem) Messfehler bezüglich der Wellenlänge bei der Analyse der Phasendifferenz die Länge verstanden, die man erhält, wenn man den absoluten Phasenfehler in Grad (Vollkreis 360°) bei der Analyse der Phasendifferenz mit der Wellenlänge der Welle bzw. des Wellenanteils multipliziert und durch 360°dividiert.

Als Abstand zwischen Abstrahlvorrichtungen und Empfangsvorrichtungen ist dabei in der Regel der Abstand zwischen den am nächst liegenden Abstrahlvorrichtungen und Empfangsvorrichtungen anzusetzen. Dies kann jedoch dann anders sein, wenn nur einzelne Abstrahl- und/oder Empfangsvorrichtungen aus einer Vielzahl von Abstrahl- und/oder Empfangsvorrichtungen näher benachbart sind, als die Mehrzahl der Abstrahl- und/oder Empfangsvorrichtungen. Entscheidend ist viel mehr, dass die Verhältnisse bei der Betrachtung von mindestens zwei der Abstrahlvorrichtungen und mindestens zwei der Empfangsvorrichtungen entsprechend eingehalten werden.

Unter der Verwendung von Abstrahlvorrichtungen mit bezüglich der Polarisation unterschiedlichen Abstrahlcharakteristiken ist nicht zu verstehen, dass die erste Empfangsvorrichtung bei einem Vergleich mit der zweiten Abstrahlvorrichtung, der die Polarisation beinhaltet, leichte Unterschiede aufweist. Zu einer Dekorrelation durch Abstrahlung unterschiedlich polarisierter Wellen, die eine Dekorrelation bezüglich der Amplitude bewirkt, ist es viel mehr erforderlich, dass das Abstrahlvorrichtungen mit unterschiedlichen Polarisationsrichtungen verwendet werden. Dies ist beispielsweise bei der Verwendung einer horizontal polarisierten Antenne und einer vertikal polarisierten Antenne beziehungsweise bei der Wahl einer linear polarisierten und einer zirkular polarisierten Antenne der Fall. Dies ist aber auch ebenfalls der Fall, wenn die Abstrahlvorrichtungen vornehmlich horizontal, vertikal beziehungsweise zirkular polarisiert sind. Für die Dekorrelation kommt es dabei darauf an, dass am Empfangsort von unterschiedlichen Abstrahlvorrichtungen eingestrahlte und auf dem Weg reflektierte Wellenanteile auf Grund der durch die unterschiedliche Polarisation unterschiedlichen Reflektion an Hand der Phase und/oder Amplitude zumindest teilweise unterscheidbar sind. Des Weiteren kann, insbesondere bei der Verwendung von Abstrahlvorrichtungen mit unterschiedlicher Abstrahlcharakteristik bezüglich der Polarisation, eine weitere Verbesserung durch Analyse der Polarisation der empfangenen Wellenanteile erreicht werden.

Besonders vorteilhaft kann es auch sein, die Dekorrelation sowohl auf Basis des Abstandes der Abstrahlvorrichtungen als auch auf Basis der Polarisation der abgestrahlten Wellen durchzuführen und somit die beiden dekorrelierenden Aspekte zu kombinieren.

Die Auswertung der empfangenen Signale kann sowohl danach erfolgen, welche Einfallsrichtungen unterschiedliche Wellenanteile aufweisen oder sich darauf beschränken, die Anzahl der unterschiedlichen Einfallsrichtungen zu ermitteln. Das Ermitteln lediglich einer Anzahl von unterschiedlichen Einfallsrichtungen bzw. der Anzahl von unterschiedlichen Einfallsrichtungen stellt lediglich eine Verdichtung des Informationsmaterials dar, das gewonnen wird beziehungsweise werden kann, wenn die Wellenanteile nach unterschiedlichen Einfallsrichtungen aufgetrennt werden. Allerdings ist es unter Umständen möglich, die Ermittlung einer solchen Anzahl mit weniger Rechenaufwand durchzuführen, als notwendig wäre, wenn die empfangenen Wellenanteile vollständig nach Einfallsrichtungen aufgetrennt werden. Selbstverständlich kann eine solche Auswertung bestimmte Grenzen beinhalten, nach denen nur Richtungen ausgewertet werden, aus denen ein bestimmter Wellenanteil bzw. eine bestimmte Signalstärke (relativ oder absolut) eingefallen ist. Des Weiteren können auch nur die Wellenanteile nach Einfallsrichtungen aufgeschlüsselt werden, die zu einer bestimmten Menge der stärksten oder schwächsten Signaleinfallsrichtungen zählen.

Des Weiteren kann die Ermittlung der Anzahl unterschiedlicher Einfallsrichtungen ebenfalls unter Einbeziehung solcher Grenzen erfolgen.

Dabei kommt es nicht darauf an, dass die Einfallsrichtungen der Wellenanteile der ersten und zweiten Welle, die über einen Ausbreitungsweg empfangen wurden unterschieden werden. Viel mehr ist es Ziel, die Einfallsrichtungen von Wellenanteilen zu unterschiedlichen, die über unterschiedliche Ausbreitungswege übertragen wurden. Das bedeutet, dass beispielsweise die Wellenanteile der ersten und zweiten Welle, die ohne Reflektion direkt übertragen wurden (erster Ausbreitungsweg), von den Wellenanteilen der ersten und zweiten Welle unterschieden, werden sollen, die über die Reflexion an einer Ebene übertragen wurden (zweier Ausbreitungsweg). So reicht es für das erfindungsgemäße Verfahren auch aus, die Einfallsrichtung der Wellenanteile, die über einen Ausbreitungsweg empfangen wurden, gemeinsam, also beispielsweise im Mittel, zu bestimmen.

Die Unterscheidung der Ausbreitungswege erfolgt dabei anhand der erfindungsgemäßen Dekorrelation. Sie führt bei den über verschiedene Ausbreitungswege empfangenen Wellenanteilen zu Unterschieden in der Phase und/oder Amplitude und gegebenenfalls Polarisation, an Hand derer die Wellenanteile, die über unterschiedliche Ausbreitungswege empfangen wurden, unterschieden werden können.

Die Unterscheidung zwischen Wellenanteilen der ersten und zweiten Welle ist beispielsweise auf Basis der Zeit beziehungsweise der zeitlichen Abfolge oder der Frequenz (bei Abstrahlung der ersten Welle mit einer von der Frequenz beziehungsweise dem Frequenzspektrum oder dem Frequenzgang der zweiten Welle unterschiedlichen/m Frequenz/-gang/-spektrum) möglich.

Unter Signal einer Empfangsvorrichtung ist das Signal zu verstehen, dass an einer Empfangsvorrichtung beim Empfang eines Wellenanteils entsteht. Das ist in der Regel der an der Empfangsvorrichtung messbare Spannungsverlauf.

Die Bestimmung der Einfallsrichtungen selbst kann beispielsweise durch das Verwenden von Autokorrelationsmatrizen der Messwerte der Empfangsvorrichtungen und Anwendung von Arrayresponsen durchgeführt werden. Solche Verfahren sind aus dem Stand der Technik bekannt. Dabei kann auf verschiedene Verfahren zurückgegriffen werden. So können die Arrayresponsen als Matrizen oder Funktionen berechnet werden oder gespeichert sein. Auch ist eine Verwendung von mehrdimensionalen Arrayresponsen möglich. Des Weiteren können zur Ausfilterung von Rausch- oder Störanteilen weitere Verfahren beispielsweise MUSIC oder Capon zur Anwendung gelangen. Diese Methoden sind aus dem Stand der Technik bekannt.

Durch den Fachmann lässt sich die weitere Signalverarbeitung implementieren und an die jeweilige Anforderung anpassen. Auch die Wahl der entsprechenden Empfangsvorrichtungen und deren Anzahl als auch die Art und Anzahl der Abstrahlvorrichtungen lassen sich durch den Fachmann an die jeweiligen Anwendungsanforderungen anpassen. Dabei ist darauf zu achten, dass die angestrebte Winkelgenauigkeit durch die verwendeten Komponenten, insbesondere zur Phasenanalyse, erreicht werden kann.

Mit Vorteil ist darauf zu achten, dass die Anordnung so gewählt wird, dass die Winkeldivergenz von der ersten Welle und der zweiten Welle an den jeweiligen Empfangsvorrichtungen eine entsprechende Höchstgrenze nicht überschreitet, um eine Zuordnung der Wellenanteile zu ermöglichen.

Zur Verbesserung der Winkelauflösung kann das erfindungsgemäße Verfahren des Weiteren mit zahlreichen Verfahren aus dem Stand der Technik kombiniert werden.

Besonders vorteilhaft ist es gemäß Anspruch 2, die Anordnung so zu wählen, dass Wellenanteile der ersten und zweiten Welle, die einen im wesentlichen gleichen Signallaufweg genommen haben am zweiten Ort, also an den Empfangsvorrichtungen, eine Winkeldivergenz zwischen den Wellenanteilen der ersten und den Wellenanteilen der zweiten Welle von weniger als zehn Grad (Vollkreis 360°), insbesondere von weniger als fünf Grad aufweisen. Unter im wesentlichen gleichen Signallaufwegen ist beispielsweise zu verstehen, dass die Wellenanteile zwar an leicht unterschiedlichen Positionen abgestrahlt wurden, ansonsten aber an den gleichen Ebenen, aber nicht unbedingt an exakt gleichen Punkten bzw. Bereichen der Ebenen, reflektiert wurden. Für die Anforderung des Anspruchs 2 reicht es dabei aus, wenn die Winkeldivergenz nur bei Signallaufwegen, die keine Reflektion oder nur eine oder mehrere Reflektionen an ebenen Flächen aufweisen, die Anforderung an die Größe der Winkeldivergenz erfüllt. Auch muss diese Anforderung nicht für alle solche Signallaufwege gelten. Es reicht vielmehr aus, wenn sichergestellt ist, dass die Anforderung an die Größe der Winkeldivergenz in der gewählten Anordnung von den am zweiten Ort eintreffenden beziehungsweise empfangbaren, also mit zur Auswertung ausreichender Amplitude, Wellenanteilen erfüllt ist.

Unter ebener Fläche ist dabei nicht nur eine makroskopisch ausgedehnte Fläche zu verstehen. Je nach eingesetzten Wellen und deren Wellenlänge reichen auch kleine Ebenen oder näherungsweise ebene Flächen aus. Entscheidend ist vielmehr, dass bei einer Reflektion zweier Wellen(anteile) an einer ebenen Fläche im Sinne der vorliegenden Schrift die Winkeldivergenz zwischen den Wellenanteilen vor der Reflektion und nach der Reflektion näherungsweise identisch sind.

Eine Anordnung gemäß Anspruch 2 ermöglicht eine besonders gute Zuordnung der Wellenanteile der ersten und der zweiten Welle, die einen weitestgehend identischen Signallaufweg hinter sich gebracht haben. Dadurch ist eine besonders zuverlässige bzw. besonders leicht durchzuführende Analyse der Einfallsrichtungen möglich. Unterschiedliche Winkeldivergenzen von Wellen zweier feststehender Abstrahlvorrichtungen ergeben sich, wenn der Blickwinkel auf die Abstrahlvorrichtungen geändert wird. Dies ist auch der Fall, wenn über eine reflektierende Fläche auf die Abstrahlvorrichtungen geschaut wird.

Die Winkeldivergenz kann beispielsweise dadurch gering gehalten werden, dass der Abstand zwischen der ersten und zweiten Abstrahlvorrichtung klein im Verhältnis zum Abstand zwischen den Abstrahlvorrichtungen und den Empfangsvorrichtungen gehalten wird. Der Fachmann kann die für bestimmte Winkeldivergenzen notwendigen Abstandsverhältnisse durch einfache geometrische Betrachtungen ermitteln. Dies wird besonders einfach, wenn die Geometrie des Einsatzortes und die Anordnung und Position(en) der Abstrahlvorrichtungen und Empfangsvorrichtungen zumindest weitestgehend bekannt ist.

Vorteilerhafterweise werden gemäß Anspruch 3 die Schritte A bis D mehrfach durchgeführt. Dabei werden bevorzugt mehr als zwei Abstrahlvorrichtungen verwendet. Somit sind mehrere Szenarien denkbar. Beispielsweise kann eine Vielzahl von Abstrahlvorrichtungen verwendet werden und das Abstrahlen mit jeder Abstrahlvorrichtung jeweils ein Mal durchgeführt werden. Auch ist es beispielsweise denkbar, nur wenige Abstrahlvorrichtungen zu verwenden und mit jeder Abstrahlvorrichtung mehrfach abzustrahlen. Auch hier ist es nicht erforderlich, dass die Wellen empfangen werden, bevor neue Wellen ausgestrahlt werden. Dies kann jedoch die Durchführung zuverlässiger machen. Der Schritt F, die Auswertung der empfangenen Signale bezüglich der Einfallsrichtungen, kann ebenfalls mehrfach durchgeführt werden oder erst erfolgen, nachdem alle empfangbaren Wellenanteile empfangen wurden.

Je nach Anwendungsfall kann es besonders vorteilhaft sein, als erste und zweite Abstrahlvorrichtung identische Abstrahlvorrichtungen zu verwenden und diese in einem Abstand anzuordnen, der größer ist als der Fehler bezüglich der Wellenlänge bei der Analyse der Phasendifferenz, insbesondere mindestens 3% der kleinsten Wellenlänge der ersten und zweiten Welle, die zur Auswertung verwendet werden sollen, insbesondere mehr als 5 % dieser Wellenlänge, beträgt. Identische Abstrahlvorrichtungen in diesem Sinne liegen auch vor, wenn sie Abweichungen im Rahmen der Fertigungstoleranz aufweisen.

Eine solche Wahl der Abstrahlvorrichtungen kann insbesondere dann von Vorteil sein, wenn bekannt ist, welche Signale den Abstrahlvorrichtungen zugeführt werden. Denn dann kann in der Auswertung berücksichtigt werden, dass die Abstrahlung von den zwei Abstrahlvorrichtungen, abgesehen von der Ortsverschiebung, identisch war.

Andererseits kann es je nach Anwendungsfall auch besonders vorteilhaft sein, wenn gemäß Anspruch 5 als erste und zweite Abstrahlvorrichtung eine einzige Sendevorrichtung verwendet wird, die zwischen der Durchführung der Schritte A und C von einer ersten Position am ersten Ort zu einer zweiten Position am ersten Ort bewegt wird, wobei der Abstand zwischen der ersten Position und der zweiten Position größer ist als der Fehler bezüglich der Wellenlänge bei der Analyse der Phasendifferenzen der kleinsten Wellenlänge der ersten und zweiten Welle und/oder die Sendevorrichtung so bewegt wird, dass sie bei Durchführung der Schritte A und C eine bezüglich der Polarisation unterschiedliche Abstrahlcharakteristik aufweist.

Durch die Verwendung einer einzigen Sendevorrichtung kann Platz und Material eingespart werden. Dies wird jedoch durch das Vorsehen von Vorrichtungen zur Bewegung in den meisten Anwendungsfällen zumindest aufgewogen. Für eine der angestrebten Auflösung entsprechende Positionierungsgenauigkeit ist dabei zu sorgen. Vorstellbar ist hier beispielsweise, dass durch einen Linearmotor eine einzige Sendevorrichtung zwischen der Abstrahlung der ersten Welle und der zweiten Welle eine vorbestimmte Strecke linear verschoben wird. Des Weiteren ist es beispielsweise vorstellbar, dass eine Sendevorrichtung, die beispielsweise linear polarisiert ist, um 90 Grad gedreht wird und somit bezüglich der Polarisation bei der Abstrahlung der ersten bzw. der zweiten Welle eine unterschiedliche Abstrahlcharakteristik aufweist, die eine Unterscheidung der Wellenanteile am zweiten Ort ermöglicht.

Besonders vorteilhaft kann es sein, den Abstrahlvorrichtungen gemäß Anspruch 6 zur Abstrahlung ein Signal zeitlich nacheinander und insbesondere mit unterschiedlicher Phasenverschiebung zuzuführen. Dies kann bei der Auswertung berücksichtigt werden und zur Vereinfachung bzw. zur Erzielung besserer Ergebnisse beitragen.

Bevorzugt kann das Signal gemäß Anspruch 7 zeitlich wiederholende Abschnitte aufweisen. Auch dies kann bei der Auswertung zur Vereinfachung beitragen.

Besonders bevorzugt wird es, wenn die Auswertung gemäß Anspruch 8 im Schritt F die Amplitude der empfangenen Wellenanteile berücksichtigt.

Besonders vorteilhaft kann es sein, gemäß Anspruch 9 zwei bezüglich der räumlichen Abstrahlcharakteristik verschiedene Abstrahlvorrichtungen einzusetzen. Durch die Wahl solch unterschiedlicher Abstrahlvorrichtungen kann es beispielsweise möglich sein, die erste Welle noch besser von der zweiten Welle zu trennen, da entsprechend an einer Ebene reflektierte Anteile der ersten und der zweiten Welle in einer solchen Anordnung in der Regel deutlichere Amplitudenunterschiede aufweisen werden, als bei der Verwendung von Abstrahlvorrichtungen mit (abgesehen von der Polarisation) identischer Abstrahlcharakteristik. Auch kann dadurch eine bessere Ausleuchtung der Umgebung ermöglicht werden. Dies kann beispielsweise dann von Vorteil sein, wenn beabsichtigt ist, die Position der Abstrahlvorrichtungen zu lokalisieren. In einem solchen Fall kann durch die Wahl solcher Abstrahlvorrichtungen gewährleistet werden, dass auch besonders günstige Übertragungswege mit vergleichsweise hohem Signalpegel zur Übertragung von Abstrahlvorrichtung zu Empfangsvorrichtung beitragen.

Besonders vorteilhaft kann es sein, gemäß Anspruch 10 Wellen unterschiedlicher Frequenz abzustrahlen und die Auswertung so durchzuführen, dass die Frequenz der Wellenanteile berücksichtigt wird. Dadurch kann es, wenn denn entsprechende Frequenzbänder zur Verfügung stehen, möglich sein, die Genauigkeit und/oder Zuverlässigkeit weiter zu steigern. Des Weiteren ist es denkbar, die Auswertung bei unterschiedlichen Umgebungsverhältnissen bevorzugt oder ausschließlich auf Basis der Dekorrelation durch unterschiedliche Frequenzen, unterschiedliche Polarisationen und/oder unterschiedliche Abstrahlpositionen durchzuführen.

Besonders vorteilhaft kann es sein, zur Abstrahlung und/oder zum Empfang ein Antennenarray vorzusehen. Hier ist beispielsweise der Einsatz von linearen Arrays denkbar. Durch den Einsatz von solchen Arrays, die eine Vielzahl von Empfangs- bzw. Abstrahlvorrichtungen beinhalten, kann die Genauigkeit deutlich erhöht werden.

Besonders vorteilhaft kann es sein, die Durchführung der Schritte A und C, insbesondere deren Wiederholung, durch ein Signal, insbesondere elektromagnetische Wellen, insbesondere für eine vorbestimmte Zeit, zu aktivieren. Bei der Durchführung dieses Verfahrens kann auf diese Weise Energie eingespart werden und das Abstrahlen nur dann durchgeführt werden, wenn es zur Auswertung erwünscht ist.

Vorteilerhafterweise kann gemäß Anspruch 13 die Energie zur Abstrahlung zumindest teilweise von außen, insbesondere durch elektromagnetische Strahlung, zugeführt werden. Dies ermöglicht es, die Abstrahlvorrichtungen mit nur kleinem oder ohne Energiespeicher auszuführen und/oder eine beinahe unendliche Einsatzdauer der Abstrahlvorrichtungen zu erreichen.

Ein erfindungsgemäßes System beinhaltet ein erstes Objekt mit mindestens zwei Abstrahlvorrichtungen und eine mit diesen Abstrahlvorrichtungen verbindbare Signalerzeugungseinrichtung und ein zweites Objekt mit mindestens zwei Empfangsvorrichtungen und eine durch Kommunikationsmittel mit dem zweiten Objekt verbundene Auswertungseinrichtung. Die Auswertungseinrichtung ist so eingerichtet, dass sie die empfangenen Wellenanteile unter Analyse der Phasendifferenzen und/oder Amplitudenunterschiede der Signale nach unterschiedlichen Einfallsrichtungen der Wellen auftrennt und/oder eine Anzahl von unterschiedlichen Einfallsrichtungen, aus denen die empfangenen Wellenanteile übertragen wurden, ermittelt. Dabei ist der Abstand zwischen der ersten und der zweiten Abstrahlvorrichtung klein im Verhältnis zum Abstand zwischen den Abstrahlvorrichtungen und den Empfangsvorrichtungen. Des Weiteren ist die erste Abstrahlvorrichtung in einem Abstand von der zweiten Abstrahlvorrichtung angeordnet, der größer ist als der Fehler bezüglich der Wellenlänge bei der Analyse der Phasendifferenz, insbesondere mindestens 3% der kleinsten Wellenlänge der ersten und zweiten Welle, die zur Auswertung verwendet werden sollen, insbesondere von mehr als 5 % dieser Wellenlänge, beträgt und/oder sind die Abstrahlvorrichtungen so eingerichtet, dass sie bezüglich der Polarisation eine unterschiedliche Abstrahlcharakteristik aufweisen. Insbesondere erfolgt die Auswertung unter Anwendung eines Verfahrens gemäß einer der Ansprüche 1 bis 13.

Das erfindungsgemäße System ist somit so eingerichtet, dass es das erfindungsgemäße Verfahren gemäß einer der Ansprüche 1 bis 13 durchführen kann. Die oben gemachten Ausführungen zu den einzelnen Begriffen, dem Verfahren sowie zu den erfindungswesentlichen Voraussetzungen und Weiterbildungen gelten hier entsprechend.

Bei einer erfindungsgemäßen Verwendung von mindestens zwei Abstrahlvorrichtungen gemäß Anspruch 15 an einem ersten Ort und mindestens zwei Empfangsvorrichtungen an einem zweiten Ort zur Analyse der Einfallsrichtungen, aus denen die von den Abstrahlvorrichtungen emittierten Wellenanteile zum zweiten Ort übertragen wurden und/oder Ermitteln einer Anzahl von unterschiedlichen Einfallsrichtungen, aus denen die von den Abstrahlvorrichtungen emittierten Wellenanteile zum zweiten Ort übertragen wurden, ist der Abstand zwischen den Abstrahlvorrichtungen klein im Verhältnis zum Abstand zwischen den Abstrahlvorrichtungen und den Empfangsvorrichtungen und wobei die Analyse und/oder das Ermitteln unter Analyse der Phasendifferenzen und/oder Amplitude der Signale durchgeführt werden. Des Weiteren sind bei einer solchen erfindungsgemäßen Verwendung die Abstrahlvorrichtungen in einem Abstand voneinander angeordnet, der größer ist als der Fehler bezüglich der Wellenlänge bei der Analyse der Phasendifferenz, insbesondere mindestens 3% der kleinsten Wellenlänge der ersten und zweiten Welle, die zur Auswertung verwendet werden sollen, insbesondere von mehr als 5 % dieser Wellenlänge, beträgt und/oder sind die Abstrahlvorrichtungen so ausgewählt, dass sie eine bezüglich der Polarisation unterschiedliche Abstrahlcharakteristik aufweisen. Insbesondere erfolgt die erfindungsgemäße Verwendung unter Anwendung eines Verfahrens nach einem der Ansprüche 1 bis 13. Die oben gemachten Ausführungen und Weiterbildungsmöglichkeiten gelten entsprechend.

Die Ausführungen haben den Kern der Erfindung deutlich aufgezeigt und ermöglichen es dem Fachmann, anwendungsentsprechende Umsetzungen auszuführen und entsprechende Abwandlungen durchzuführen, die den Bereich der Erfindung nicht verlassen. Anhand der folgenden Erläuterungen sollen nun weitere Vorteile und Anwendungsmöglichkeiten aufgezeigt werden. Dies erfolgt anhand der rein schematischen und beispielhaften sowie nicht beschränkenden Figuren.

Die Figuren zeigen im Einzelnen:
Figur 1 eine schematische Darstellung der Ausbreitung der ersten und zweiten Welle von den Abstrahlvorrichtungen zur ersten Empfangsvorrichtung und
Figur 2 eine schematische, jedoch detailliertere Darstellung der Ausbreitung insbesondere der ersten Welle.

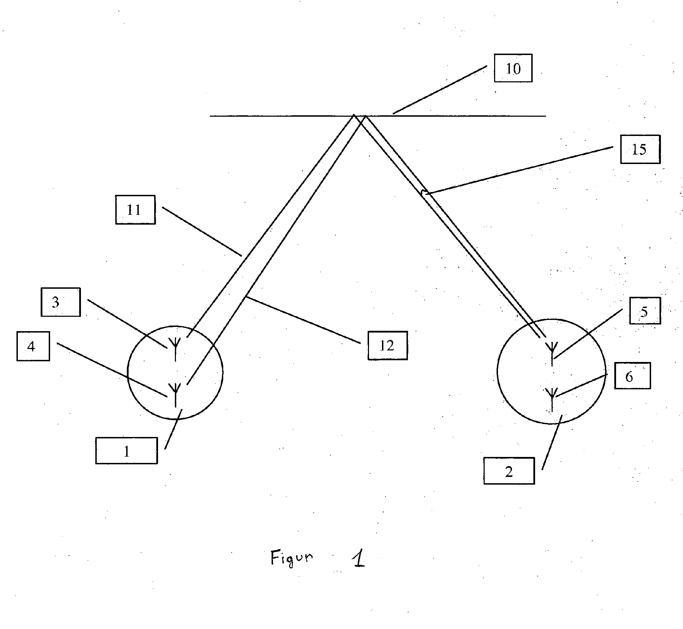

Figur 1 zeigt einen ersten Ort 1 mit einer ersten Abstrahlvorrichtung 3 und einer zweiten Abstrahlvorrichtung 4. Des Weiteren gezeigt ist ein zweiter Ort 2 mit einer ersten Empfangsvorrichtung 5 und einer zweiten Empfangsvorrichtung 6. Oben im Bild ist exemplarisch eine Reflexionsebene 10 eingezeichnet. Desweiteren ist exemplarisch jeweils ein Ausbreitungsweg der ersten Welle 11 von der ersten Abstrahlvorrichtung 3 zur ersten Empfangsvorrichtung 5 und ein Ausbreitungsweg der zweiten Welle 12 von der zweiten Abstrahlvorrichtung 4 zur ersten Empfangsvorrichtung 5 eingezeichnet.

Zu erkennen ist, dass die erste Welle 11 im Bezug auf die zweite Welle 12 beim Eintreffen am zweiten Ort 2 eine Winkeldivergenz 15 aufweist. Die Ausbreitungswege für den Empfang an der zweiten Empfangsvorrichtung 6 sind hier aus Gründen der Übersichtlichkeit nicht eingezeichnet.

Ebenfalls nicht eingezeichnet sind die direkten Ausbreitungswege zwischen den Abstrahlvorrichtungen 3, 4 und den Empfangsvorrichtungen 5, 6.

Die Bestimmung der unterschiedlichen Einfallsrichtungen erfolgt auf vorbekannte Weise aufgrund der Phasendifferenzen der von einer Abstrahlvorrichtung 3, 4 über einen Ausbreitungsweg an den mehreren Empfangsvorrichtungen 5, 6 empfangenen Signalanteile. Dabei erfolgt die Unterscheidung der über verschiedene Ausbreitungswege empfangenen Wellenanteile auf Grund der erfindungsgemäßen Dekorrelation, also auf Basis unterschiedlicher Phasen, Amplituden und gegebenenfalls Polarisationen der empfangenen Wellenanteile.

Diese Unterschiede bezüglich der Phase, die zur Ermittlung der Einfallsrichtung verwendet werden ergeben sich aufgrund unterschiedlicher Signallaufweglängen. Dies wird in analoger Weise ersichtlich, wenn man sich den Ausbreitungsweg der ersten Welle 11 und der zweiten Welle 12 von den Abstrahlvorrichtungen 3, 4 zu der zweiten Empfangsvorrichtung 6 vorstellt. Dann ist der Signallaufweg der ersten bzw. zweiten Welle 11, 12 zur ersten Empfangsvorrichtung 5 im Vergleich zu dem Signallaufweg zur zweiten Empfangsvorrichtung 6 von unterschiedlicher Länge. Dies kann man für die Ausbreitung von einer Abstrahlvorrichtung 3, 4 zu zwei Empfangsvorrichtungen 5, 6 übertragen. Dann ergibt sich auf Grund der unterschiedlichen Länge der Signallaufwege der Wellenanteile die an der ersten Empfangsvorrichtung 5 und an der zweiten Empfangsvorrichtung 6 empfangen werden eine Phasendifferenz.

Die Unterschiede, die zur Unterscheidung zwischen einzelnen Ausbreitungswegen verwendet werden ergeben sich aufgrund unterschiedlicher Signallaufweglängen und Änderungen der Phase beziehungsweise Amplitude und gegebenenfalls Polarisation bei Reflexionen. Dies wird ersichtlich, wenn man sich weitere Ausbreitungswege der ersten Welle 11 und der zweiten Welle 12 von den Abstrahlvorrichtungen 3, 4 zu einer der Empfangsvorrichtung 5, 6 vorstellt, wie beispielsweise den direkten Ausbreitungsweg. Dann ist der Signallaufweg der ersten bzw. zweiten Welle 11, 12 zu einer der Empfangsvorrichtung 5, 6 über einen ersten Ausbreitungsweg im Vergleich zu dem Signallaufweg über einen zweiten Ausbreitungsweg von unterschiedlicher Länge. Dies bedeutet, dass die Anteile der ersten Welle 11 bzw. der zweiten Welle 12, die an einer der Empfangsvorrichtung 5, 6 über den ersten Ausbreitungsweg empfangen werden, bezüglich der Phasenlage Unterschiede zu den Anteilen der ersten Welle 11 bzw. der zweiten Welle 12, die an einer der Empfangsvorrichtung 5, 6 über den zweiten Ausbreitungsweg empfangen, aufweisen werden. Des Weiteren werden die Wellenanteile, die über unterschiedliche Ausbreitungswege übertragen werden, an unterschiedlichen Ebenen (gezeigt ist nur eine Ebene 10) und einfach, mehrfach oder überhaupt nicht reflektiert werden, was zu unterschiedlichen Veränderungen der Wellen bezüglich der Amplitude, Phase und/oder Polarisation führen kann. Auf Basis dieser Phasendifferenzen und/oder dieser Amplitudenunterschiede und gegebenenfalls Polarisationsunterschiede lassen sich die unterschiedlichen Ausbreitungswege voneinander unterscheiden. Die erste Welle 11, die von der ersten Abstrahlvorrichtung 3 abgestrahlt wurde, lässt sich von der von der zweiten Abstrahlvorrichtung 4 abgestrahlten zweiten Welle 12 durch verschiedene Maßnahmen unterscheiden. In Frage kommt beispielsweise eine Unterscheidung auf Basis der Zeit beziehungsweise der zeitlichen Abfolge oder der Frequenz.

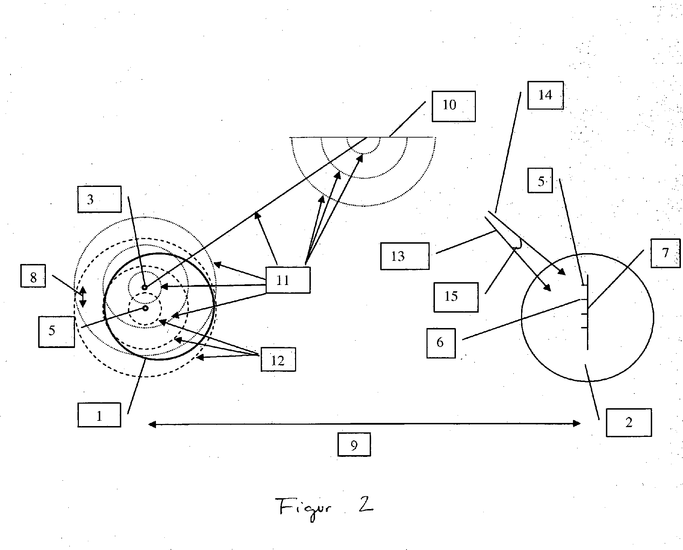

Figur 2 zeigt eine der Anordnung aus Figur 1 sehr ähnliche Anordnung. Zu erkennen sind rechts im Bild ein zweiter Ort 2 mit einem linearen Empfangsarray 7, beinhaltend vier Empfangsvorrichtungen, darunter eine erste Empfangsvorrichtung 5 und eine zweite Empfangsvorrichtung 6. Links im Bild zu erkennen ist ein erster Ort 1 mit einer ersten Abstrahlvorrichtung 3 und einer zweiten Abstrahlvorrichtung 4. Gekennzeichnet ist zum einen der Abstand zwischen erster und zweiter Abstrahlvorrichtung 8 und der Abstand zwischen den Abstrahlvorrichtungen und den Empfangsvorrichtungen 9, deren Verhältnis Auswirkungen auf die Winkeldivergenz 15 der empfangenen Wellenanteile hat.

Des Weiteren eingezeichnet ist eine Reflektionsebene 10. Darüber hinaus sind die Ausbreitung der ersten Welle 11 und der zweiten Welle 12 durch unterschiedliche Darstellungen der Welle veranschaulicht. Links im Bild sind erste und zweite Welle 11, 12 zunächst durch konzentrische Kreise gleicher Feldstärke eingezeichnet. Des Weiteren ist die erste Welle durch eine Linie einer Ausbreitungsrichtung zur Reflektionsebene 10 veranschaulicht. An der Reflexionsebene 10 sind sodann wieder konzentrische Halbkreise gleicher Feldstärke eines reflektierten Wellenanteils gezeigt. Die reflektierte Welle wird dabei lediglich in dem Anteil verdeutlicht, der an einem einzigen Punkt, der durch die durchgezogene Linie der Ausbreitungsrichtung gekennzeichnet ist, reflektiert wird.

Im Verlaufe der Ausbreitung der Wellen zu den Empfangsvorrichtungen 5, 6 ist sodann wieder die Ausbreitungsrichtung der an einem Punkt reflektierten Wellenanteile der ersten und zweiten Welle 11, 12 durch Pfeile gekennzeichnet.

Die Einfallsrichtungen der ersten bzw. zweiten Welle 13, 14 weisen eine Winkeldivergenz 15 auf.

In Figur 2 ebenfalls nicht gezeigt ist unter anderem auch der direkte Ausbreitungsweg zwischen Abstrahlvorrichtungen 3, 4 und Empfangsvorrichtungen 5, 6. Die erste und zweite Welle 11, 12 lassen sich beim Empfang anhand der Dekorrelation durch den Abstand 8 zwischen erster und zweiter Abstrahlvorrichtung 3, 4 voneinander unterscheiden. Die an verschiedenen Punkten reflektierten Wellenanteile der ersten Welle 11 bzw. der zweiten Welle 12 lassen sich, wenn die Winkeldivergenz 15 der über einen Ausbreitungsweg empfangenen Wellenanteile der ersten und zweiten Welle 11, 12 ein vorbestimmtes Maß nicht überschreitet, den unterschiedlichen Ausbreitungswegen zuordnen (gezeigt ist nur die Ausbreitung über einen Ausbreitungsweg). Dabei kommt es nicht darauf an, dass die Einfallsrichtungen der Anteile der ersten Welle 13 und der der zweiten Welle 14, die über einen Ausbreitungsweg empfangen wurden, unterschieden werden. Viel mehr ist es Ziel, die Einfallsrichtungen der unterschiedlichen Ausbreitungswege voneinander zu unterscheiden. So reicht es für das erfindungsgemäße Verfahren auch aus, die Einfallsrichtung der Anteile der ersten und zweiten Welle 11, 12, die über einen Ausbreitungsweg empfangen wurden, gemeinsam, also beispielsweise im Mittel zu bestimmen. Dass es auf das Bestimmen der Einfallsrichtung der ersten und der zweiten Welle als separate Winkelangaben nicht ankommt, wird auch dadurch deutlich, dass die Winkeldivergenz 15 der über einen Ausbreitungsweg übertragenen Wellenanteile bevorzugt eine niedrige Höchstgrenze nicht überschreiten sollte.

### Bezugszeichen

- 1: erster Ort
- 2: zweiter Ort
- 3: erste Abstrahlvorrichtung
- 4: zweite Abstrahlvorrichtung
- 5: erste Empfangsvorrichtung
- 6: zweite Empfangsvorrichtung
- 7: lineares Empfangsarray
- 8: Abstand zwischen erster und zweiter Abstrahlvorrichtung
- 9: Abstand zwischen den Abstrahlvorrichtungen und den Empfangsvorrichtungen
- 10: Reflektionsebene
- 11: erste Welle
- 12: zweite Welle
- 13: Einfallsrichtung der ersten Welle
- 14: Einfallsrichtung der zweiten Welle
- 15: Winkeldivergenz

## Patentansprüche

1. Verfahren zur Analyse von Ausbreitungswegen von Wellenanteilen beinhaltend:
A Abstrahlen einer ersten Welle von einer ersten Abstrahlvorrichtung an einem ersten Ort
B Empfangen der an einem zweiten Ort eingestrahlten Wellenanteile der ersten Welle mit mindestens zwei Empfangsvorrichtungen
C Abstrahlen einer zweiten Welle von einer zweiten Abstrahlvorrichtung an dem ersten Ort
D Empfangen der am zweiten Ort eingestrahlten Wellenanteile der zweiten Welle
F Auswertung der empfangenen Signale, wobei die empfangenen Wellenanteile nach unterschiedlichen Einfallsrichtungen der Wellenanteile aufgetrennt werden und/oder Ermitteln einer Anzahl von unterschiedlichen Einfallsrichtungen aus denen die die empfangenen Wellenanteile übertragen wurden,
wobei dies unter Analyse der Phasendifferenzen und/oder Amplituden der Signale der mindestens zwei Empfangsvorrichtungen geschieht,
wobei der Abstand zwischen erster und zweiter Abstrahlvorrichtung kleiner ist als der Abstand zwischen den Abstrahlvorrichtungen und den Empfangsvorrichtungen und
**dadurch gekennzeichnet**, die Abstrahlvorrichtungen einen Abstand voneinander aufweisen, der größer ist als der Fehler bezüglich der Wellenlänge bei der Analyse der Phasendifferenzen der kleinsten der zur Analyse verwendeten Wellenlänge der ersten und zweiten Welle und/oder die Abstrahlvorrichtungen eine bezüglich der Polarisation unterschiedliche Abstrahlcharakteristik aufweisen.

2. Verfahren nach Anspruch 1, **dadurch gekennzeichnet, dass** Wellenanteile der ersten und der zweiten Welle mit im wesentlichen gleichem Signallaufweg, am zweiten Ort eine Winkeldivergenz von weniger als 10°, insbesondere von weniger als 5°, zwischen den Wellenanteilen der ersten und der zweiten Welle aufweisen, wobei der Signallaufweg der betrachteten Wellenanteile keine Reflektion oder nur Reflektionen an ebenen Flächen aufweist.

3. Verfahren nach einem der vorstehenden Ansprüche, **dadurch gekennzeichnet, dass** die Schritte A bis D mehrfach durchgeführt werden, insbesondere mit mehr als zwei Abstrahlvorrichtungen.

4. Verfahren nach einem der vorstehenden Ansprüche, **dadurch gekennzeichnet, dass** als erste und zweite Abstrahlvorrichtung identische Abstrahlvorrichtungen verwendet werden und diese einen Abstand voneinander aufweisen, der größer ist als der Fehler bezüglich der Wellenlänge bei der Analyse der Phasendifferenzen der kleinsten Wellenlänge der ersten und zweiten Welle.

5. Verfahren nach einem der Ansprüche 1 bis 3, **dadurch gekennzeichnet, dass** als erste und zweite Abstrahlvorrichtung eine einzige Sendevorrichtung verwendet wird, die zwischen der Durchführung des Schritts A und des Schritts C von einer ersten Position am ersten Ort zu einer zweiten Position am ersten Ort bewegt wird, wobei der Abstand zwischen der ersten Position und der zweiten Position größer ist als der Fehler bezüglich der Wellenlänge bei der Analyse der Phasendifferenzen der kleinsten Wellenlänge der ersten und zweiten Welle und/oder die Sendevorrichtung so bewegt wird, dass sie bei Durchführung der Schritte A und C eine bezüglich der Polarisation unterschiedliche Abstrahlcharakteristik aufweist.

6. Verfahren nach einem der vorstehenden Ansprüche, **dadurch gekennzeichnet, dass** den Abstrahlvorrichtungen zur Abstrahlung ein Signal zeitlich nacheinander und insbesondere mit unterschiedlicher Phasenverschiebung zugeführt wird.

7. Verfahren nach dem vorstehenden Anspruch, **dadurch gekennzeichnet, dass** das Signal sich zeitlich wiederholende Abschnitte aufweist.

8. Verfahren nach einem der vorstehenden Ansprüche, **dadurch gekennzeichnet, dass** die Auswertung auch auf Basis der Amplitude der empfangenen Wellenanteile erfolgt.

9. Verfahren nach dem vorstehenden Anspruch, **dadurch gekennzeichnet, dass** mindestens zwei bezüglich der räumlichen Abstrahlcharakteristik verschiedene Abstrahlvorrichtungen eingesetzt werden.

10. Verfahren nach einem der vorstehenden Ansprüche, **dadurch gekennzeichnet, dass** von mindestens einer Abstrahlvorrichtung Wellen mit unterschiedlicher Frequenz abgestrahlt werden und die Auswertung die Frequenzen der empfangenen Wellenanteile berücksichtigt.

11. Verfahren nach einem der vorstehenden Ansprüche, **dadurch gekennzeichnet, dass** als Empfangsvorrichtungen und/oder Abstrahlvorrichtungen ein Antennenarray verwendet wird.

12. Verfahren nach einem der vorstehenden Ansprüche, **dadurch gekennzeichnet, dass** die Schritte A und C, insbesondere deren Wiederholung, durch ein Signal, insbesondere elektromagnetische Wellen, insbesondere für eine vorbestimmte Zeit, aktiviert werden.

13. Verfahren nach einem der vorstehenden Ansprüche, **dadurch gekennzeichnet, dass** die zur Abstrahlung eingesetzte Energie zumindest teilweise aus von außen, insbesondere durch elektromagnetische Strahlung, zugeführter Energie gewonnen wird.

14. System beinhaltend ein erstes Objekt mit mindesten zwei Abstrahlvorrichtungen und eine mit diesen Abstrahlvorrichtungen verbindbäre Signalerzeugungseinrichtung und ein zweites Objekt mit mindestens zwei Empfangsvorrichtungen und eine durch Kommunikationsmittel mit dem zweiten Objekt verbundene Auswertungseinrichtung, die die empfangenen Wellenanteile unter Analyse der Phasendifferenzen und/oder Amplituden der Signale der Empfangsvorrichtungen nach unterschiedlichen Einfallsrichtungen der Wellenanteile auftrennt und/oder eine Anzahl von unterschiedlichen Einfallsrichtungen aus denen die empfangenen Wellenanteile übertragen wurden, ermittelt,
wobei der Abstand zwischen erster und zweiter Abstrahlvorrichtung kleiner ist als der Abstand zwischen den Abstrahlvorrichtungen und den Empfangsvorrichtungen und
**dadurch gekennzeichnet, dass** die erste Abstrahlvorrichtung einen Abstand von der zweiten Abstrahlvorrichtung aufweist, der größer ist als der Fehler bezüglich der Wellenlänge bei der Analyse der Phasendifferenzen der kleinsten Wellenlänge der zur Analyse der Phasendifferenzen verwendeten Wellen und/oder die Abstrahlvorrichtungen eine bezüglich der Polarisation unterschiedliche Abstrahlcharakteristik aufweisen.

15. Verwendung von mindestens zwei Abstrahlvorrichtungen an einem ersten Ort und mindestens zwei Empfangsvorrichtungen an einem zweiten Ort zur Analyse der Einfallsrichtungen, aus denen die von den Abstrahlvorrichtungen emittierten Wellenanteile zum zweiten Ort übertragen wurden, und/oder Ermitteln einer Anzahl von unterschiedlichen Einfallsrichtungen, aus denen die von den Abstrahlvorrichtungen emittierten Wellenanteile zum zweiten Ort übertragen wurden, wobei der Abstand zwischen den Abstrahlvorrichtungen kleiner ist als der Abstand zwischen den Abstrahlvorrichtungen und den Empfangsvorrichtungen und wobei die Analyse und/oder das Ermitteln unter Analyse der Phasendifferenzen der empfangenen Wellenanteile geschieht
**dadurch gekennzeichnet, dass** die Abstrahlvorrichtungen einen Abstand voneinander aufweisen, der größer ist als der Fehler bezüglich der Wellenlänge bei der Analyse der Phasendifferenzen der kleinsten zur Analyse der Phasendifferenzen verwendeten Wellen und/oder die Abstrahlvorrichtungen eine bezüglich der Polarisation unterschiedliche Abstrahlcharakteristik aufweisen:

## Claims

1. A method of analysing propagation paths of wave portions comprising:
A radiating a first wave from a first radiating device at a first location
B receiving at a second location with at least two receiving devices radiated wave portions of the first wave
C radiating a second wave from a second radiating device at the first location
D receiving at the second location wave portions of the second wave radiated
F interpretation of the signals received, wherein the wave portions received are separated according to different incident directions of the wave portions and/or determination of a number of different incident directions from which the wave portions received were transmitted;
wherein this operation comprises analysing the phase differences and/or amplitudes of the signals of said at least two receiving devices,
wherein the distance between the first radiation device and the second radiation device is smaller than the distance between the radiation devices and the receiving devices and **characterised in** the radiation devices are spaced apart from each other by a distance which is larger than the error related to the wavelength when analysing the phase differences of the smallest wavelength used for analysis of the first wave and of the second wave and/or the radiation devices have a different radiation characteristic in terms of polarisation.

2. The method according to claim 1, **characterised in that** wave portions of the first wave and of the second wave with essentially the same signal path, have on the second location an angular divergence smaller than 10°, in particular smaller than 5°, between the wave portions of the first wave and of the second wave, wherein the signal path of the wave portions considered does not have any reflections or only reflections on flat surfaces.

3. The method according to one of the previous claims, **characterised in that** the steps A to D are carried out several times, in particular with more than two radiation devices.

4. The method according to one of the previous claims, **characterised in that** identical radiation devices are used as the first radiation device and the second radiation device and they are spaced apart from each other by a distance which is larger than the error in terms of wavelength when analysing the phase differences of the smallest wavelength of the first wave and of the second wave.

5. The method according to one of the claims 1 to 3, **characterised in that** a single sending device is used as the first radiation device and the second radiation device, which is moved between the execution of step A and of step C from a first position at the first location to a second position at the first location, wherein the distance between the first position and the second position is larger than the error in terms of the wavelength when analysing the phase differences of the smallest wavelength of the first wave and the second wave and/or the sending device is moved in such a way that it has a different radiation characteristic in terms of polarisation when carrying out steps A and C.

6. The method according to one of the previous claims, **characterised in that** a signal is conveyed to the radiation devices for radiating signals, temporally after one another and in particular with a different phase shift.

7. The method according to the above claim, **characterised in that** the signal has temporally repeated sections.

8. The method according to one of the previous claims, **characterised in that** the interpretation is carried out on the basis of the amplitude of the wave portions received.

9. The method according to the above claim, **characterised in that** at least two different radiation devices are employed in terms of spatial radiation characteristic.

10. The method according to one of the previous claims, **characterised in that** waves are radiated with a different frequency from at least one radiation device and the interpretation takes into account the frequencies of the wave portions received.

11. The method according to one of the previous claims, **characterised in that** an antenna array is used as receiving devices and/or radiation devices.

12. The method according to one of the previous claims, **characterised in that** steps A and C, especially their repeat, are actuated through a signal, in particular electromagnetic waves, in particular for a preset time period.

13. The method according to one of the previous claims, **characterised in that** the energy used for radiating is recovered at least partially from the energy conveyed externally, in particular through electromagnetic radiation.

14. A system comprising a first object with at least two radiation devices and a signal generating device which can be connected to said radiation devices and a second object with at least two receiving devices and an interpretation device connected to the second object through means of communication, which divides the wave portions received by analysing the phase differences and/or the amplitudes of the signals of the receiving devices according to different incident directions of the wave portions and/or determines a number of different incident directions from which the wave portions received were transmitted,
wherein the distance between the first radiation device and the second radiation device is smaller than the distance between the radiation devices and the receiving devices and
**characterised in that** the first radiation device is spaced apart from the second radiation device by a distance which is larger than the error in terms of the wavelength when analysing the phase differences of the smallest wavelength used for analysis of the first wave and of the second wave and/or the radiation devices have a different radiation characteristic in terms of polarisation.

15. The use of at least two radiation devices at a fixed location and at least two receiving devices at a second location for analysing incident directions, from which the wave portions emitted by the radiation devices have been transmitted to the second location, and/or determination of a number of different incident directions, from which the wave portions emitted by the radiation devices have been transmitted to the second location, wherein the distance between the radiation devices is smaller than the distance between the radiation devices and the receiving devices and wherein the wave portions received are analysed and/or determined by analysing the phase differences
**characterised in that** the radiation devices are spaced apart from each other by a distance which is larger than the error in terms of the wavelength when analysing the phase differences of the smallest wavelength used for analysis of the phase differences and/or the radiation devices have a different radiation characteristic in terms of polarisation.

## Revendications

1. Procédé d'analyse de trajets de propagation de portions d'ondes comprenant :
A le rayonnement d'une première onde à partir d'un premier dispositif de rayonnement en un premier point
B la réception en un second point avec au moins deux dispositifs de réception, des portions d'onde émises de la première onde
C le rayonnement d'une seconde onde à partir d'un second dispositif de rayonnement en un premier point
D la réception au second point des portions d'onde de la seconde onde émise
F l'interprétation des signaux reçus, où les portions d'onde reçues sont séparées selon différentes directions d'incidence des portions d'onde et/ou la détermination de directions d'incidence différentes à partir desquelles les portions d'onde reçues ont été transmises ;
où ladite opération englobe l'analyse des différences de phase et/ou les amplitudes des signaux desdits au moins deux dispositifs de réception,
où la distance entre le premier dispositif de rayonnement et le second dispositif de rayonnement est inférieure à la distance entre les dispositifs de rayonnement et les dispositifs de réception et **caractérisé en ce que** les dispositifs de rayonnement sont espacés l'un de l'autre par une distance supérieure à l'erreur associée à la longueur d'onde lorsque l'on analyse les différences de phase de la plus petite longueur d'onde utilisée pour l'analyse de la première onde et de la seconde onde et/ou les dispositifs de rayonnement présentent une caractéristique de rayonnement différente en termes de polarisation.

2. Procédé selon la revendication 1, **caractérisé en ce que** les portions d'onde de la première onde et de la seconde onde ayant sensiblement le même trajet de signal présentent au second point une divergence angulaire inférieure à 10°, en particulier inférieure à 5°, entre les portions d'onde de la première onde et de la seconde onde, où le trajet de signal des portions d'onde considérées n'a aucune réflexion ou seulement des réflexions sur des surfaces planes.

3. Procédé selon l'une des revendications précédentes, **caractérisé en ce que** les phases A et D se déroulent plusieurs fois, en particulier en présence de plus de deux dispositifs de rayonnement.

4. Procédé selon l'une des revendications précédentes, **caractérisé en ce que** l'on utilise des dispositifs de rayonnement identiques comme premier dispositif de rayonnement et comme second dispositif de rayonnement et qu'ils sont espacés l'un de l'autre par une distance supérieure à l'erreur en termes de longueur d'onde lorsque l'on analyse les différences de phase de la plus petite longueur d'onde utilisée pour la première onde et la seconde onde.

5. Procédé selon l'une des revendications 1 à 3, **caractérisé en ce que** l'on utilise un simple dispositif d'émission comme premier dispositif de rayonnement et comme second dispositif de rayonnement, que l'on déplace entre l'exécution de la phase A et l'exécution de la phase C d'une première position au niveau du premier point vers une seconde position au niveau du premier point, où la distance entre la première position et la seconde position est supérieure à l'erreur en termes de longueur d'onde lorsque l'on analyse les différences de phase de la plus petite longueur d'onde de la première onde et de la seconde onde et/ou que l'on déplace le dispositif d'émission de telle sorte qu'il présente une caractéristique de rayonnement différente en termes de polarisation lorsque l'on exécute les phases A et C.

6. Procédé selon l'une des revendications précédentes, **caractérisé en ce qu'**un signal est acheminé aux dispositifs de rayonnement pour émettre des signaux de façon temporaire l'un après l'autre et en particulier avec un décalage de phase différent.

7. Procédé selon la revendication ci-dessus, **caractérisé en ce que** le signal ait des sections temporairement répétées.

8. Procédé selon l'une des revendications précédentes, **caractérisé en ce que** l'interprétation est réalisée sur la base de l'amplitude des portions d'onde reçues.

9. Procédé selon la revendication ci-dessus, **caractérisé en ce qu'**au moins deux dispositifs de rayonnement différents sont employés en termes de caractéristique de rayonnement spatial.

10. Procédé selon l'une des revendications précédentes, **caractérisé en ce que** des ondes soient émises à une fréquence différente à partir d'au moins dispositif de rayonnement et l'interprétation prend en compte les fréquences de portions d'onde reçues.

11. Procédé selon l'une des revendications précédentes, **caractérisé en ce que** la matrice d'antennes sert de dispositifs de réception et/ou de dispositifs de rayonnement.

12. Procédé selon l'une des revendications précédentes, **caractérisé en ce que** les phases A et C, en particulier leur répétition, sont activées par un signal, en particulier des ondes électromagnétiques, en particulier pendant une période prédéterminée.

13. Procédé selon l'une des revendications précédentes, **caractérisé en ce que** l'énergie servant au rayonnement est récupérée, au moins partiellement, de l'énergie acheminée à l'extérieur, en particulier par rayonnement électromagnétique.

14. Système comprenant un premier objet avec au moins deux dispositifs de rayonnement et un dispositif de génération de signaux qui peuvent être connectés auxdits dispositifs de rayonnement et un second objet avec au moins deux dispositifs de réception et un dispositif d'interprétation connecté au second objet à travers des moyens de communication, qui divise les portions d'onde reçues par analyse des différences de phase et/ou les amplitudes des signaux des dispositifs de réception selon différentes directions d'incidence des portions d'onde et/ou détermine un certain nombre de directions d'incidence différentes à partir desquelles les portions d'onde reçues ont été transmises,
où la distance entre le premier dispositif de rayonnement et le second dispositif de rayonnement est inférieure à la distance entre les dispositifs de rayonnement et les dispositifs de réception et
**caractérisé en ce que** le premier dispositif de rayonnement est espacé du second dispositif de rayonnement par une distance qui est supérieure à l'erreur en termes de longueur d'onde lorsque l'on analyse les différences de phase de la plus petite longueur d'onde utilisée pour l'analyse de la première onde et de la seconde onde et/ou les dispositifs de rayonnement présentent une caractéristique de rayonnement différente en termes de polarisation.

15. Utilisation d'au moins deux dispositifs de rayonnement en un point fixe et au moins deux dispositifs de réception en un second point pour analyser des directions d'incidence, à partir desquelles les portions d'onde émises par les dispositifs de rayonnement ont été transmises au second point, et/ou détermination d'un certain nombre de différentes directions d'incidence, à partir desquelles les portions d'onde émises par les dispositifs de rayonnement ont été transmises au second point, où la distance entre les dispositifs de rayonnement est inférieure à la distance entre les dispositifs de rayonnement et les dispositifs de réception et où les portions d'onde reçues sont analysées et/ou déterminées par analyse des différences de phase,
**caractérisée en ce que** les dispositifs de rayonnement sont espacés l'un de l'autre par un distance qui est supérieure à l'erreur en termes de longueur d'onde lorsque l'on analyse les différences de phase de la plus petite longueur d'onde utilisée pour l'analyse des différences de phase et/ou les dispositifs de rayonnement présentent une caractéristique de rayonnement différente en termes de polarisation.
